Europäisches Patentamt

(19) European Patent Office

Office européen des brevets

(11) Publication number: **0 204 666**
**B1**

(12) # EUROPEAN PATENT SPECIFICATION

(45) Date of publication of the patent specification:
26.07.89

(51) Int. Cl.⁴: **F 16 K  31/40, F 16 K  31/383**

(21) Application number: **86830140.9**

(22) Date of filing: **26.05.86**

(54) . A two-way reversible-flow hydraulic control valve.

(30) Priority: **31.05.85  IT 4005485**

(43) Date of publication of application:
**10.12.86 Bulletin 86/50**

(45) Publication of the grant of the patent:
**26.07.89 Bulletin 89/30**

(84) Designated Contracting States:
**CH DE FR GB IT LI NL**

(56) References cited:
**GB-A- 900 738**
**US-A- 2 470 470**
**US-A- 2 480 712**

(73) Proprietor: **EDI SYSTEM Srl, Via G. di Vittorio N. 21,
I-41100 Modena (IT)**

(72) Inventor: **Pighetti, Antonio, Via Beschieri, 18,
I-41043 Formigine Modena (IT)**

(74) Representative: **Lanzoni, Luciano, c/o BUGNION S.p.A.
Viale Trento Trieste, 25, I-41100 Modena (IT)**

## Description

The invention relates to a two-way control valve with reversible-flow characteristic for use in hydraulic applications.

Valves of the type to which the invention relates are very often solenoid-operated. The solenoid actuates a plunger within the valve, urging it into an open or closed position and permitting flow of the fluid in either direction through the valve as a result. Generally speaking, the opening and closing movements of such valves need high power solenoids, since the hydraulic forces exerted on their plungers during operation are usually relatively high.

A valve of the type referred to is disclosed in US-A-2 480 712. The valve in question is provided with a first passage and a second passage with relative check valves, which connect the inlet and outlet ports of the valve with a chamber; the chamber also connects with the inlet and outlet passages by way of third and fourth passages, likewise incorporating check valves, that are opened by a second plunger. When the second plunger operates to open the third and fourth passage, the main plunger of the valve lifts, and fluid is able to flow from the pressure port to the exhaust port.

This conventional type of valve is beset by the drawbacks of being somewhat complex in construction, with tortuous internal galleries, and difficult to assemble; a further disadvantage is that the plunger must be spring-biased in order to operate.

Accordingly, the object of the present invention is to overcome the aforementioned drawbacks, providing a hydraulic valve that features significantly compact construction and ease of assembly.

A first advantage of the valve disclosed is that it can function efficiently across a wide range of pressure and flow characteristics, since no spring action are notably limited.

A further advantage of the valve according to the invention is that it can be operated by extremely low power solenoids.

The stated object and advantages, and others besides, are realized with the valve to which the invention relates, which is of a type having a first obturator, or plunger (1) which is actuated to open or block the flow path between two ports (A, B) of the valve, comprising

— a first passage (5) located internally of the plunger, provided with a first restriction (5a) and connecting the first port (A) of the valve with a chamber (9) the shape and location of which are such that fluid pressure therein acts on the plunger and urges it toward the closed position;

— a first check valve (5b) located within the first passage such as to allow flow of the fluid from the first valve port (A) to the chamber;

— a second passage (6) located internally of the plunger, provided with a second restriction (6a) and connecting the second port (B) of the valve with the chamber;

— a second check valve (6b) located within the second passage such as to allow flow of the fluid from the second valve port (B) to the chamber;

— an unloading passage connecting the chamber with the valve outlet (port A or B);

— a second, externally operated obturator (4) actuated to open or block the unloading passage; characterised in that the unloading passage comprises:

— a third passage (7) located internally of the plunger connecting the chamber with the first valve port (A), and incorporating a third check valve (7a) designed to allow flow of fluid from the chamber to the first port;

— a fourth passage (8) located internally of the plunger connecting the chamber with the second valve port (B), and incorporating a third check valve (8a) designed to allow flow of fluid from the chamber to the second port.

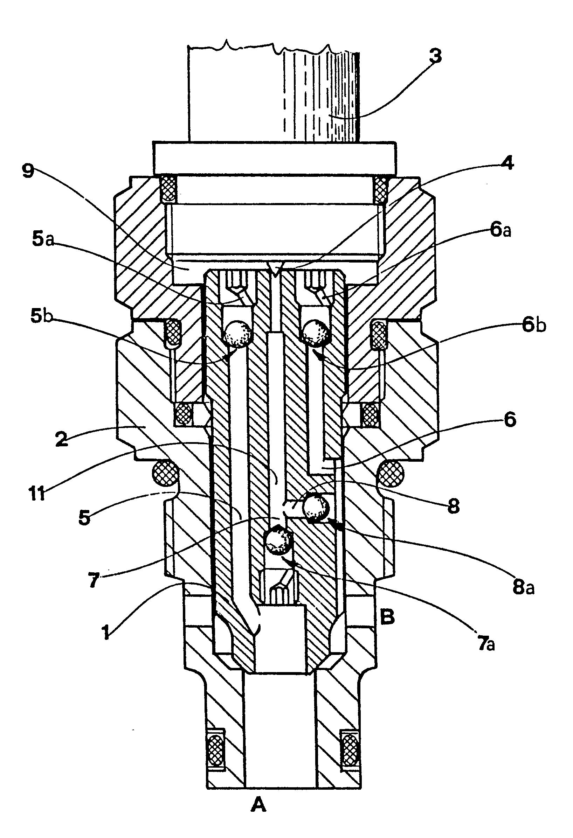

A preferred embodiment of the valve will now be described in detail, by way of example, with reference to the accompanying drawing, which is a section seen in vertical elevation.

The hydraulic valve to which the invention relates is a two-way reversible-flow control valve which serves substantially to allow or shut off flow of fluid from a first port A to a second port B, and viceversa; to this end, the valve incorporates a first obturator, or plunger 1, which when operated opens or closes the flow path between the two ports A and B.

The valve illustrated is of a general type in common use wherein upon the plunger 1 pressure is exerted frontally by a flow of fluid entering through the first port A, and pressure is exerted radially by a flow of fluid entering through the second port B. The plunger 1 itself is movable within a body 2 that incorporates the two ports A and B.

The rear end of the plunger 1 has a section of larger area than that of its front end, for reasons which will become apparent in due course. The part of the valve body that accommodates the rear end of the plunger is provided with a chamber 9; it follows that fluid pressure existing within this chamber 9 will act on the plunger 1, urging it toward the closed position.

The chamber 9 communicates with the first port A of the valve by way of a first passage 5, in which a restriction 5a is located. This first passage 5 also incorporates a first check valve 5b that admits flow into the chamber 9 from the port A, though not in the reverse direction.

The chamber 9 communicates likewise with the second port B by way of a second passage 6, also provided with a restriction 6a, and similarly incorporating a check valve 6b that admits flow into the chamber 9 from the second port B, though not in the reverse direction.

The valve also incorporates an unloading passage that connects the chamber 9 with the outlet (port A or B), either directly or indirectly, and thus provides a controllable means whereby the chamber 9 can be relieved of pressure.

In the example illustrated, the unloading passage comprises a third passage 7 connecting the chamber 9 with the first port A and provided with a third check valve 7a which allows flow from the chamber 9 to the first port A, though not in the reverse direction.

The same unloading passage also comprises a fourth passage 8, connecting the chamber 9 with the second port B and provided similarly with a fourth check valve 8a which allows flow from the chamber 9 to the second port B, though not in the reverse direction.

The third and fourth passages 7 and 8 have a common bore 11 extending toward the chamber 9; a second obturator, which in this instance is a needle 4 seated in the end of the bore 11 and operated externally by a solenoid 3, provides the control by which to open or close the unloading passage, that is, the third and fourth passages; the common bore 11 of the two passages 7 and 8 terminates in an orifice the reduced diameter of which provides the needle 4 with a limited surface area against which to register.

The four flow passages 5, 6, 7 and 8 and all of their respective internal components are incorporated into the plunger 1, thereby rendering the valve remarkably compact. It will be observed that, even were the unloading passage to be embodied as an external fluid line connected directly to the outlet (port A or B), the design disclosed would still provide the notable advantage of dispensing altogether with drain lines, which are the cause of considerable problems and complications in hydraulic systems; drain lines can lead to a loss of fluid under pressure, which in turn can provoke malfunction of the system into which the valve is connected.

The following description of the valve's operation assumes entry of fluid under pressure via the first port, or outlet A, with the valve blocking or allowing flow across the valve from A to B.

As long as the needle 4 registers in the orifice of the bore 11, blocking the unloading passages 7 and 8, pressure transmitted from the inlet A up through the passage 5, check valve 5b and restriction 5a into the chamber 9, acts on the rear end of the plunger 1 and urges it into the closed position, the area of the rear end being larger than that of the front end.

Thus, with the needle 4 seated and the unloading passage closed, pressure in the chamber 9 matches inlet pressure at A, as flow from the chamber 9 via the second passage 6 to the second port B (which is the outlet in this case) remains similarly blocked by the relative check valve 6b.

Operation of the solenoid 3 causes the needle 4 to be moved away from the bore 11 that communicates with the two unloading passages 7 and 8, and pressure in the chamber 9 is exhausted via the fourth check valve 8 and through the outlet B; the plunger 1 moves under pressure of the fluid entering through the inlet A, and fluid is allowed to flow directly from A to B.

It will be noted that, in the situation thus arrived at, fluid will continue to flow through the first passage 5; pressure in the chamber 9 cannot approach inlet pressure through A however, as a sharp pressure drop occurs through the restriction 5a.

With the needle 4 re-seated by the solenoid 3, fluid pressure in the chamber 9 returns to that registering through the inlet A and urges the plunger 1 back into closed position.

In the event of pressure flow entering via the port denoted B, and crossing the valve from B to A, operation of the valve clearly remains the same as already described, with the sole difference that those functions which were performed by the first passage 5 and its internal components will now be performed by the second passage 6 and the second internal components; pressure in the chamber 9 is unloaded similarly by unseating the needle 4, though in this instance fluid will exhaust through the third check valve 7a instead of the fourth 8a.

A valve thus described will operate faultlessly without being affected either by very low fluid pressures or by very high fluid pressures; a valve according to the invention avoids the use of a spring bias which, imparting force to the plunger 1 that is independent of fluid pressure, can modify operation of the valve itself when pressure fluctuates.

Also worthy of note is that the valve, whilst able to operate with extremely high flow rate and pressure characteristics, requires a markedly low power for energization of the solenoid 3, by virtue of the fact that the section of the needle 4 which the solenoid actuates is noticeably small. It follows therefore, that the size of the solenoid 3, and by definition, the overall dimensions of a solenoid operated embodiment of the valve, can be made singularly compact.

## Claims

1. A two-way reversible-flow hydraulic control valve of a type having a first obturator, or plunger (1) which is actuated to open or block the flow path between two ports (A, B) of the valve, comprising

— a first passage (5) located internally of the plunger, provided with a first restriction (5a) and connecting the first port (A) of the valve with a chamber (9) the shape and location of which are such that fluid pressure therein acts on the plunger and urges it toward the closed position;

— a first check valve (5b) located within the first passage such as to allow flow of the fluid from the first valve port (A) to the chamber;

— a second passage (6) located internally of the plunger, provided with a second restriction (6a) and connecting the second port (B) of the valve with the chamber;

— a second check valve (6b) located within the second passage such as to allow flow of the fluid from the second valve port (B) to the chamber;

— an unloading passage connecting the chamber with the valve outlet (port A or B);

— a second, externally operated obturator (4) actuated to open or block the unloading passage;

characterised in that the unloading passage comprises:

— a third passage (7) located internally of the plunger connecting the chamber with the first valve port (A), and incorporating a third check valve (7a) designed to allow flow of fluid from the chamber to the first port;

— a fourth passage (8) located internally of the plunger connecting the chamber with the second valve port (B), and incorporating a third check valve (8a) designed to allow flow of fluid from the chamber to the second port.

2. Valve as in claim 1, characterised in that a solenoid (3) is provided for the purpose of actuating the second obturator.

3. Valve as in claim 1, characterised in that upon the first obturator, or plunger (1) pressure is exerted frontally, by a flow of fluid entering through the first port (A), and radially, by a flow of fluid entering through the second port (B), wherein the rear end of such a plunger exhibits a cross-sectional area greater than that of the front end thereof, and the chamber (9) is located to the rear of the plunger in such a way that pressure therein will act on the rear end of greater area.

4. Valve as in claim 1, characterised in that the third and the fourth passage have a common bore (11) extending toward the chamber, and wherein the second obturator is actuated to open or close such a bore.

## Patentansprüche

1. Hydraulisches Zweiweg-Umkehrflusssteuerventil vom Typ enthaltend einen ersten Verschluss oder Tauchkolben (1), der angetrieben ist, um den Fliessweg zwischen zwei Ventilöffnungen (A, B) zu öffnen oder zu verschliessen, und das wie folgt enthält:

— einen ersten, sich im Inneren des Tauchkolbens befindlichen Durchlass (5), der mit einer ersten Verengung (5a) versehen ist und die erste Ventilöffnung (A) mit einer Kammer (9) verbindet, deren Form und Anordnung eine solche ist, dass der darin vorhandene Fliessdruck auf den Tauchkolben wirkt und diesen in die geschlossene Position drückt;

— ein erstes Absperrventil (5b), das in dem ersten Durchlass so angeordnet ist, dass es den Fluss der Flüssigkeit von der ersten Ventilöffnung (A) zu der Kammer erlaubt;

— einen zweiten, sich im Inneren des Tauchkolbens befindlichen Durchlass (6), der mit einer zweiten Verengung (6a) versehen ist und die zweite Ventilöffnung (B) mit der Kammer verbindet;

— ein zweites Absperrventil (6b), das in dem zweiten Durchlass so angeordnet ist, dass es den Fluss der Flüssigkeit von der zweiten Ventilöffnung (B) zu der Kammer erlaubt;

— eine Ablussleitung, welche die Kammer mit dem Ventilauslass (Öffnung A oder B) verbindet;

— einen zweiten, von aussen betätigten Verschluss (4) zum Öffnen oder Schliessen der Abflussleitung;

dadurch gekennzeichnet, dass die Abflussleitung wie folgt umfasst:

— eine dritte, im Inneren des Tauchkolbens angeordnete Leitung (7), welche die Kammer mit der ersten Ventilöffnung (A) verbindet und ein drittes Absperrventil (7a) enthält, das dazu bestimmt ist, den Fluss der Flüssigkeit von der Kammer zu der ersten Öffnung zu ermöglichen;

— eine vierte, im Inneren des Tauchkolbens angeordnete Leitung (8), welche die Kammer mit der zweiten Ventilöffnung (B) verbindet und ein viertes Absperrventil (8a) enthält, das dazu bestimmt ist, den Fluss der Flüssigkeit von der Kammer zu der zweiten Öffnung zu ermöglichen.

2. Ventil nach Patentanspruch 1, dadurch gekennzeichnet, dass ein Elektromagnet (3) mit dem Zweck vorgesehen ist, den zweiten Verschluss zu betätigen.

3. Ventil nach Patentanspruch 1, dadurch gekennzeichnet, dass auf den ersten Verschluss oder Tauchkolben (1) einen Druck ausübt, und zwar frontal durch den Fluss der durch die ersten Öffnung (A) eintretenden Flüssigkeit und radial durch den Fluss der durch die zweiten Öffnung (B) eintretenden Flüssigkeit, und dadurch, dass das rückwärtige Ende dieses Tauchkolbens einen grösseren Querschnitt aufweist als das vordere Ende und die Kammer (9) auf solcher Weise an dem rückwärtigen Ende des Tauchkolbens angeordnet ist, dass der darin vorhanden Druck auf die grössere Fläche des rückwärtigen Endes wirkt.

4. Ventil nach Patentanspruch 1, dadurch gekennzeichnet, dass der dritte und der vierte Durchlass eine gemeinsame Bohrung (11) haben, die sich zu der Kammer hin erstreckt, und dadurch, dass der zweite Verschluss zum Öffnen oder Schliessen dieser Bohrung ausgelöst wird.

## Revendications

1. Vanne hydraulique de commande réversible à deux sens d'écoulement réversible, du type pourvu d'un premier obturateur (1) qui est actionné pour ouvrir ou fermer la voie d'écoulement entre deux orifices (A, B) de la vanne, comprenant:

— un premier passage (5) situé à l'intérieur du piston, pourvu d'un premier étranglement (5a) et reliant le premier orifice (A) de la vanne à la chambre (9) conformée et disposée de manière que la pression de fluide existant dans la chambre elle-même puisse agir sur le piston et le pousser vers sa position fermée;

— une première soupape de retenue (5b) située dans le premier passage de manière à permettre l'écoulement du fluide du premier orifice (A) de la vanne à la chambre;

— un deuxième passage (6) situé à l'intérieur du piston, pourvu d'un deuxième étranglement (6a) et reliant le deuxième orifice (B) de la vanne à la chambre;

— une deuxième soupape de retenue (6b) située dans le deuxième passage de manière à permettre l'écoulement du fluide du deuxième orifice (B) de la vanne à la chambre;

— un passage de décharge reliant la chambre à la sortie de la vanne (orifice A ou B);

— un deuxième obturateur (4) actionné de l'extérieur, destiné à ouvrir et à fermer sur commande le passage de décharge; caractérisée en ce que ledit passage de décharge comporte:

— un troisième passage (7) situé à l'intérieur du piston, reliant la chambre au premier orifice de la vanne (A) et incorporant une troisième soupape de retenue (7a) destinée à permettre l'écoulement du fluide de la chambre au premier orifice;

— un quatrième passage (8) situé à l'intérieur du piston, reliant la chambre au deuxième orifice (B) de la vanne et incorporant une troisième soupape de retenue (8a) destinée à permettre l'écoulement du fluide de la chambre au deuxième orifice.

2. Vanne selon la revendication 1, caractérisée en ce qu'on prevoit un solenoide (3) pour l'actionnement du deuxième obturateur.

3. Vanne selon la revendication 1, caractérisée en ce qu'une pression est exercée sur le premier obturateur ou piston (1) de face, par un écoulement de fluide qui entre à travers le premier orifice (A), et radialement par un écoulement de fluide qui entre à travers le deuxième orifice (B), où l'extrémité arrière dudit piston présente en coupe transversale une surface plus étendue que celle de son extrémité avant et la chambre (9) est située à l'arrière du piston de manière que la pression dans celle-ci agit sur l'extrémité arrière plus étendue.

4. Vanne selon la revendication 1, caractérisée en ce que le troisième et le quatrième passages débouchent dans un trou cylindrique commun (11) s'étendant vers la chambre et en ce que le deuxième obturateur est actionné de manière à ouvrir ou fermer ledit trou cylindrique commun.